# EUROPEAN PATENT APPLICATION

(11) **EP 1 583 004 A2**
(43) Date of publication of application: **05.10.2005**
(21) Application number: 05251830.5
(22) Date of filing: 24.03.2005
(51) Int. Cl.: G06F 17/30

(54) **MPV file creating method and apparatus and storage medium therefor**

(30) Priority: 02.04.2004 US 558549 P; 12.08.2004 KR 2004063511
(71) Applicant: SAMSUNG ELECTRONICS CO., LTD., Gyeonggi-do (KR)
(72) Inventor: Shin, Seong-Kook, Seocho-gu Seoul (KR); Kim, Young-yoon, Seocho-gu Seoul (KR); Kim, Du-il, Yeongtong-gu Suwon-si Gyeonggi-do (KR); Ahn, Jin-yong, Yeongtong-gu Suwon-si Gyeonggi-do (KR); Kim, Hee-yeon, Yeongtong-gu Suwon-si Gyeonggi-do (KR)
(74) Representative: Waddington, Richard

(57) **Abstract**

A method and apparatus are provided for creating a MultiPhotoVideo or MusicPhotoVideo (MPV) file that enables minimization of resources and/or storage capacity required to use the MPV file in a multimedia application environment, and a storage medium having recorded thereon a computer readable program for performing the method. The method includes: generating profilebag elements based on multimedia content; generating unique identification information of assets included in the multimedia content; generating a last uniform resource locator (LastURL) based on universal resource identifiers (URIs) of the assets included in the multimedia content; and creating an MPV file corresponding to the multimedia content using the profilebag elements, the unique identification information of the assets, and the LastURL. Accordingly, the MPV file, which is available to multimedia reproducing devices having limited resources and/or storage capacity, can be provided.

## Description

Apparatuses and methods consistent with the present invention relate to creating a MultiPhotoVideo or MusicPhotoVideo (MPV) file in a multimedia application environment, and a storage medium having recorded thereon a computer readable program for performing the method.

In order to reinforce interoperability between multimedia content reproducing devices, such as personal computers (PCs), and multimedia content creating devices, standardization of an MPV specification has progressed by Optical Storage Technology Association (OSTA) and International Imaging Industry Association (13A).

The aim of the MPV specification is to allow multimedia data, such as digital photos, video, audio, text, and documents, stored in storage media or storage devices, such as optical discs, memory cards, or computer hard discs, or exchanged through Internet protocols to be easily managed, reproduced, and exchanged.

The MPV specification is defined as an MPV core and profiles using the MPV core. The MPV core includes the following elements: a collection, metadata, and an identifier. The collection includes elements: a manifest, an asset list (AssetList), and marked assets (MarkedAssets). The metadata follows an extensible Markup Language (XML) format and is defined to use a last uniform resource locator (LastURL), an instance identification (InstanceID), a document identification (DocumentID), and a content identification (ContentID) for discrimination.

Also, in the profiles, a basic profile, a presentation profile, and a music profile are defined.

In this manner, a currently announced MPV specification considers a variety of creatable multimedia contents for compatibility between a plurality of multimedia content reproducing devices and a plurality of multimedia content creating devices. However, there are no mandatory details. Therefore, since MPV files having a plurality of formats can be created according to specifications of multimedia content creating devices, the multimedia content reproducing devices should parse the MPV files in various terms.

For example, since there are no mandatory details that profiles used in the MPV files should be defined when the MPV files are created, the multimedia content reproducing devices should have functions of parsing whether an asset list, an album, music assets, and other specific elements exist in each MPV file, updating a profilebag according to results of adding or deleting used profiles based on the parsing results, and creating the profilebag if the profilebag does not exist.

The multimedia content reproducing devices should have abundant resources and/or storage capacity in order to parse the MPV files in various formats. Therefore, in a case of Consumer Electronics (CE) devices and Information Technology (IT) devices in which system resources and/or storage capacity are limited, it may be difficult to use the MPV files created by the multimedia content creating devices.

The present invention provides a MultiPhotoVideo or MusicPhotoVideo (MPV) file creating method and apparatus that enables minimization of resources and/or storage capacity necessary to use an MPV file in a multimedia application environment, and a storage medium having recorded thereon a computer readable program for performing the method.

The present invention also provides a method and apparatus for creating an MPV file which can be used in devices in which resources and/or storage capacity are limited, and a storage medium having recorded thereon a computer readable program for performing the method.

According to the present invention there is provided an apparatus and method as set forth in the appended claims. Preferred features of the invention will be apparent from the dependent claims, and the description which follows.

According to an aspect of the present invention, there is provided an MPV file creating method comprising: generating profilebag elements based on multimedia content; generating unique identification information of assets included in the multimedia content; generating a last uniform resource locator (LastURL) based on universal resource identifiers (URIs) of the assets included in the multimedia content; and creating an MPV file corresponding to the multimedia content using the profilebag elements, the unique identification information of the assets, and the LastURL.

In the creating of the MPV file, one predetermined namespace may be used for each prefix, and metadata may be generated on the basis of a metadata format defined in the MPV specification.

In the creating of the MPV file, the MPV file may be created on the basis of an XML without XML entities. The unique identification information of the assets may be "mpv:id."

According to another aspect of the present invention, there is provided an MPV file creating apparatus comprising: a profilebag element generator generating profilebag elements based on multimedia content when the multimedia content is input; an identification information generator generating unique identification information of assets included in the multimedia content; a last URL generator generating a LastURL based on URIs of the assets included in the multimedia content; a namespace provider providing one namespace for each prefix; an MPV file formatter creating the MPV file corresponding to the multimedia content on the basis of the profilebag elements provided from the profilebag element generator, the unique identification information provided from the identification information generator, the LastURL provided from the last URL generator, and the namespaces provided from the namespace provider and generating the metadata of the MPV file; and a metadata generating controller controlling an MPV file formatter to generate metadata of an MPV file based on the metadata format defined by the MPV specification.

According to another aspect of the present invention, there is provided a storage medium having recorded thereon a computer readable program for performing an MPV file creating method in a multimedia application environment, the MPV file creating method comprising: generating profilebag elements based on multimedia content; generating unique identification information of assets included in the multimedia content; generating a LastURL based on URIs of the assets included in the multimedia content; and creating an MPV file corresponding to the multimedia content using the profilebag elements, the unique identification information of the assets, and the LastURL.

For a better understanding of the invention, and to show how embodiments of the same may be carried into effect, reference will now be made, by way of example, to the accompanying diagrammatic drawings in which:
FIG. 1 is a block diagram of an MPV file creating apparatus according to an exemplary embodiment of the present invention;
FIG. 2A is an example of an MPV file of a profilebag;
FIG. 2B is an example of an MPV file in which the profilebag is defined according to an exemplary embodiment of the present invention;
FIG. 3 is an example of metadata generation based on the JPEG2000 format;
FIG. 4 is a flowchart illustrating an MPV file creating method according to an exemplary embodiment of the present invention; and
FIG. 5 is a block diagram of a multimedia content reproducing apparatus using an MPV file created according to an exemplary embodiment of the present invention.

Hereinafter, the present invention will now be described more fully with reference to the accompanying drawings, in which embodiments of the invention are shown.

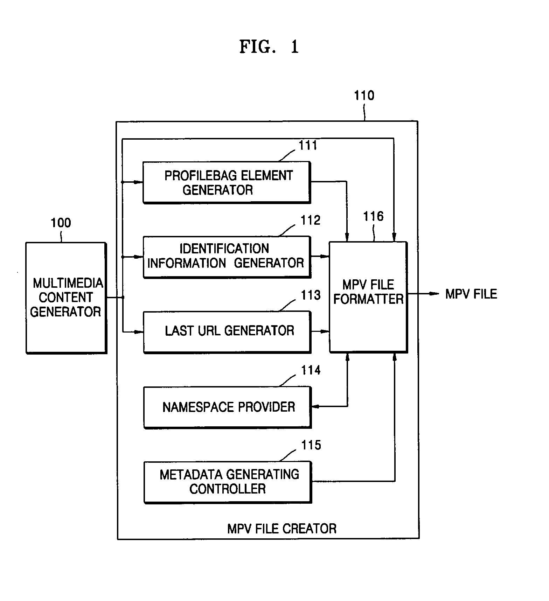

FIG. 1 is a block diagram of an MPV file creating apparatus according to an exemplary embodiment of the present invention. The MPV file creating apparatus shown in FIG. 1 may be included in a multimedia content creating device. The multimedia content creating device may be a CE device, such as a digital video camera or a digital still camera, or an IT device such as a PC. Referring to FIG. 1, the MPV file creating apparatus includes a multimedia content generator 100 and an MPV file creator 110.

The multimedia content generator 100 generates multimedia content based on multimedia data. For example, the multimedia content can be generated by CE devices, such as digital cameras, digital camcorders, and digital audio reproducing devices, on the basis of simple media data and composite media data. The simple media data includes digital photos, video, digital audio, and documents. The composite media data includes digital photos as well as digital audio, multi-shot digital photos (StillMultishotSequence), and panorama digital photos (StillPanoramaSequence). The generated multimedia content is transmitted to the MPV file creator 110.

The MPV file creator 110 creates an MPV file suitable for the input multimedia content. The MPV file can be called an MPV manifest file or an MPV document. The MPV file creator 110 includes a profilebag element generator 111, an identification information generator 112, a last URL generator 113, a namespace provider 114, a metadata generating controller 115, and an MPV file formatter 116.

The profilebag element generator 111 generates profilebag elements based on the input multimedia content. The profilebag elements define a profile, which the MPV file to be created uses. In definable profiles, there exist a basic profile, a presentation profile, and a music profile. The basic profile defines assets, which are multimedia content lists. The presentation profile defines a method of displaying multimedia content on a display screen. The music profile defines a collection of music files, musicians related to the music files, manufacturing years, and online information.

Therefore, if the input multimedia content is text of asset lists, the profilebag element generator 111 can generate profilebag elements for defining a profile, which the MPV file to be created can use, as the basic profile as shown below.
<file:profile>http://ns.osta.org/mpv/basic/1.0/</file :profile>

If the input multimedia content is video, the profilebag element generator 111 can generate profilebag elements for defining profiles, which the MPV file to be created can use, as the presentation profile as shown below.
<file:profile>http://ns.osta.org/mpv/basic/1.0/</file :profile>
<file:profile>http://ns.osta.org/mpv/presentation/1.0 /</file:profile>

If the input multimedia content is audio, the profilebag element generator 111 can generate profilebag elements for defining profiles, which the MPV file to be created can use, as the music profile with the basic profile as shown below.
<file:profile>http://ns.osta.org/mpv/basic/1.0/</file :profile>
<file:profile>http://ns.osta,org/mpv/music/1.0/</file :profile>

If the input multimedia content is a collection of video and audio, the profilebag element generator 111 can generate profilebag elements for defining profiles, which the MPV file to be created can use, as the presentation profile with the music profile as shown below.
<file:profile>http://ns.osta.org/mpv/basic/1.0/</file :profile>
<file:profile>http://ns.osta.org/mpv/presentation/1.0 /</file:profile>
<file:profile>http://ns.osta,org/mpv/music/1.0/</file :profile>

As described above, the profilebag element generator 111 basically generates the basic profile. The generated profilebag elements are transmitted to the MPV file formatter 116.

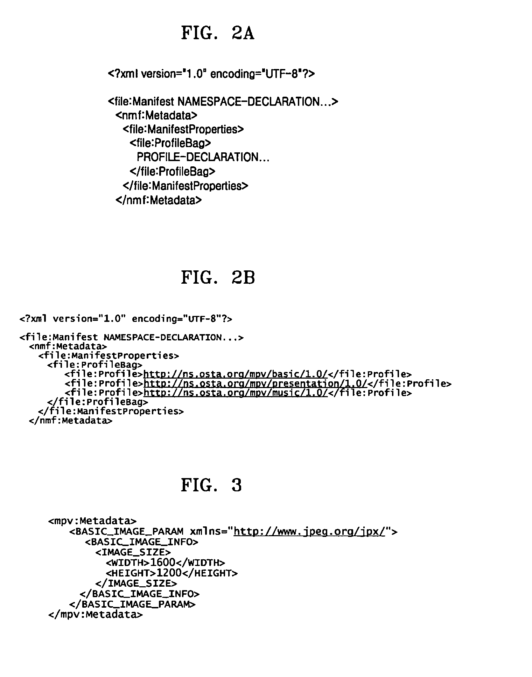

When the MPV file is formed, the MPV file formatter 116 can define the profilebag elements transmitted from the profilebag element generator 111 at a "PROFILE-DECLARATION" position of metadata of the MPV file as shown in FIG. 2A. Therefore, when the profilebag elements for defining the music profile and the presentation profile together are generated by the profilebag element generator 111, the MPV file formatter 116 can define the metadata as shown in FIG. 2B.

The identification information generator 112 assigns unique "mpv:id" to each asset based on the input multimedia content and generates the assigned "mpv:id." The asset of the multimedia content is classified into a simple asset, such as stills, video, audio, text, print, documents, and a manifest link (Manifestlink), and a composite asset, such as stills with audio (StillWithAudio), still multi-shot sequences (StillMultishotSequence), and still panorama sequences (StillPanoramaSequence).

The identification information generator 112 assigns unique "mpv:id" in simple asset units. That is, when the input multimedia content is the composite asset, the identification information generator 112 assigns unique "mpv:id" to each asset. The mpv:id assigned to each asset is available in a relevant MPV file. That is, if "mpv:id" of "still001" is assigned to a still included in currently input multimedia content, "still001" cannot be assigned as "mpv:id" to another still included in a relevant MPV file. However, "mpv:id" of "still001" can be assigned to a still included in multimedia content generated as another MPV file.

The mpv:id, which is assigned to each asset, generated by the identification information generator 112 is transmitted to the MPV file formatter 116. The MPV file formatter 116 uses the mpv:id, which is assigned to each asset, transmitted from the identification information generator 112 when an asset list (AssetList) of the input multimedia content is generated.

The last URL generator 113 generates a last uniform resource locator (LastURL) by which a location of each asset can be restored on the basis of the input multimedia content. The LastURL is defined using a relative universal resource identifier (URI) based on a URI syntax.

For example, the last URL generator 113 can generate a LastURL of an album based on the input multimedia content as <mpv:LastURL>/images/album.pvm</mpv:LastURL>.

The last URL generator 113 can generate a LastURL of audio included in the input multimedia content as <mpv:LastURL>/audios/audio01.mp3</mpv:LastURL>.

The last URL generator 113 can generate a LastURL of a still included in the input multimedia content as <mpv:LastURL>/images/still04.jpg</mpv:LastURL>.

The generated LastURLs are transmitted to the MPV file formatter 116. The MPV file formatter 116 uses the LastURL for each asset, which is transmitted from the last URL generator 113, when the AssetList of the input multimedia content is generated.

The namespace provider 114 provides predetermined namespaces so that the namespaces, which are popularly used in the MPV specification, defined in Table 1 are used when the MPV file is formed by the MPV file formatter 116. Here, the namespaces are provided so that one namespace is assigned to each prefix. Therefore, one namespace is assigned to elements, whose prefix is "dc" or "dcterms", as defined in Table 1.

The namespace provider 114 can provide not only the namespaces to the MPV file formatter 116 en bloc but also a namespace corresponding to each prefix to the MPV file formatter 116 each time when the MPV file formatter 116 demands the namespace.

**[Table 1]**

| Conventional Prefix | Meaning | Namespace Name |
|---|---|---|
| file | | http://ns.osta.org/mpv/man ifest/1.0/ |
| mpv | MPV | http://ns.osta.org/mpv/1.0 / |
| mpvp | MPV Presentation Profile | http://ns.osta.org/mpv/pre sentation/1.0/ |
| mpvm | MPV Music Profile | http://ns.osta.org/mpv/mus ic/1.0/ |
| jpeg | JPEG 2000 | http://www.jpg.org/jpx/ |
| nmf | Normalized Metadata Format | http://ns.osta.org/nmf/1.0 / |
| dc | Dublin Core elements | http://purl.org/dc/element s/1.1/ |
| dcterms | Dublin Core terms | http://purl.org/dc/terms/ |

The metadata generating controller 115 controls the MPV file formatter 116 to generate metadata of the input multimedia content based on a metadata format defined in the MPV specification. Accordingly, the MPV file formatter 116 can generate the metadata based on the DC-NMF format defined in the MPV specification or the JPEG2000 format shown in FIG. 3 for interoperability between multimedia content reproducing devices and multimedia content creating devices.

The MPV file formatter 116 creates the MPV file corresponding to the multimedia content on the basis of the information provided from the profilebag element generator 111, the identification information generator 112, the last URL generator 113, the namespace provider 114, and the metadata generating controller 115. Here, the MPV file formatter 116 creates an XML-based MPV file so that each asset has only one metadata and the same <dc:creator> value. Also, the MPV file formatter 116 does not use XML entities when creating the MPV file.

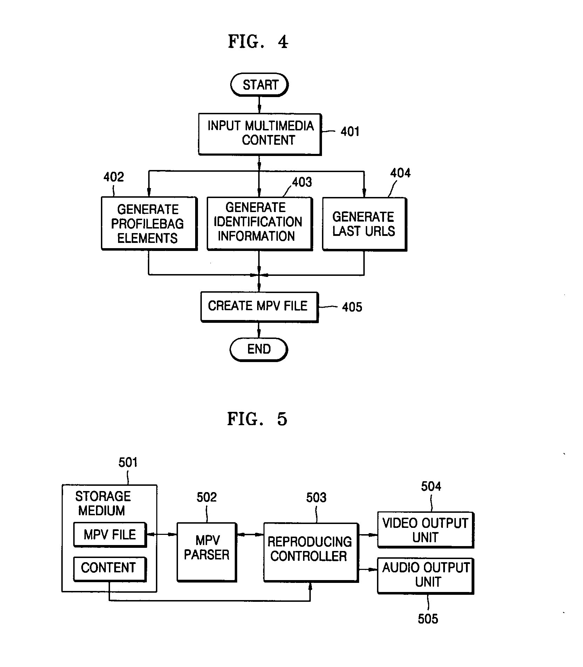

FIG. 4 is a flowchart illustrating an MPV file creating method according to an exemplary embodiment of the present invention.

Referring to FIG. 4, if multimedia content generated by the multimedia content generator 100 is input in operation 401, profilebag elements based on the input multimedia content are generated in operation 402, unique "mpv:id" for each asset included in the input multimedia content is generated in operation 403, and LastURLs for the assets included in the input multimedia content are generated on the basis of relative URIs in operation 404.

An MPV file of the input multimedia content is created using the generated profilebag elements, unique "mpv:id" for each asset, and LastURLs for the assets in operation 405. Here, metadata is generated on the basis of a general metadata format defined in the MPV specification. That is, as shown in FIG. 3, the metadata can be generated on the basis of the JPEG2000 format. Also, namespaces defined in the MPV specification are used, namespaces to be used are predetermined so that one namespace for each prefix is used, and the predetermined namespaces are used when creating the MPV file. The MPV file is created as an XML-based document from which XML entities are excluded.

FIG. 5 is a block diagram of a multimedia content reproducing apparatus using an MPV file created according to an exemplary embodiment of the present invention. Referring to FIG. 5, the multimedia content reproducing apparatus includes a storage medium 501, an MPV parser 502, a reproducing controller 503, a video output unit 504, and an audio output unit 505.

The storage medium 501 stores the MPV file created according to the present embodiment and content (or multimedia content) referred to by the MPV file.

The MPV parser 502 parses assets and metadata when parsing the MPV file read from the storage medium 501 and transmits reproducing control information for reproducing the content stored in the storage medium 501 to the reproducing controller 503. Here, the MPV parser 502 can detect elements defined at predetermined positions without parsing all of a plurality of elements for each asset and output a reproducing control signal based on the detected elements to the reproducing controller 503.

For example, in the case of a profilebag, the MPV parser 502 can detect profilebag elements defined at a first half portion of the MPV file as shown in FIG. 2B without searching for whether assets, such as an album and an AssetList, exist and output the detected profilebag elements to the reproducing controller 503. Accordingly, the reproducing controller 503 can recognize profiles to be used.

Also, since the MPV file is created on the basis of the XML without XML entities, the MPV parser 502 can analyze the MPV file in a case where the MPV parser 502 cannot operate the XML entities. Also, even if the MPV parser 502 can operate the XML entities, since the MPV parser 502 does not have to consider the XML entities when analyzing the MPV file, a load of the MPV parser 502 can be reduced.

Upon receiving the reproducing control signal from the MPV parser 502, the reproducing controller 503 controls the video output unit 504 and the audio output unit 505 to reproduce the content stored in the storage medium 501 on the basis of the received reproducing control signal. The video output unit 504 displays the content corresponding to images, such as digital photos, transmitted from the reproducing controller 503. The audio output unit 505 outputs an audio signal transmitted from the reproducing controller 503.

The method according to the present invention may be embodied in a general-purpose computer by running a program from a computer-readable medium, including but not limited to storage media such as magnetic storage media (ROMs, RAMs, floppy disks, magnetic tapes, etc.), optically readable media (CD-ROMs, DVDs, etc.), and carrier waves (transmission over the internet).

The present invention may be embodied as computer-readable program code unit recorded in a computer-readable medium, and the computer-readable program code unit can be executed in a distributed manner in a computer network. And the functional programs, codes and code segments for embodying the present invention may be easily deducted by programmers in the art which the present invention belongs to.

As described above, according to exemplary embodiments of the present invention, by creating MPV files, whose parsing is easy, the MPV files, which are available to CE or IT devices having limited resources and/or storage capacity, can be provided, interoperability between devices can be maximized, and a load of an MPV parser included in a multimedia content reproducing device can be reduced.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A MultiPhotoVideo or MusicPhotoVideo (MPV) file creating method comprising:
generating profilebag elements based on multimedia content;
generating unique identification information of assets included in the multimedia content;
generating a last uniform resource locator (LastURL) based on universal resource identifiers (URIs) of the assets included in the multimedia content; and
creating an MPV file corresponding to the multimedia content based on the profilebag elements, the unique identification information of the assets, and the LastURL.

2. The method of claim 1, wherein in the creating of the MPV file, one predetermined namespace is used for each prefix.

3. The method of claim 1 or 2, wherein in the creating of the MPV file, metadata is generated on the basis of a metadata format defined in the MPV specification.

4. The method of claim 1 or 2 or 3, wherein in the creating of the MPV file, the MPV file is created on the basis of an extensible Markup Language (XML) without XML entities.

5. The method of claim 1 or 2 or 3, wherein the unique identification information of each asset is "mpv:id."

6. A MultiPhotoVideo or MusicPhotoVideo (MPV) file creating apparatus comprising:
a profilebag element generator (111) which is operable to generate profilebag elements based on multimedia content which is input;
an identification information generator (112) which is operable to generate unique identification information of assets included in the multimedia content;
a last uniform resource locator (URL) generator (113) which is operable to generate a last URL (LastURL) based on universal resource identifiers (URIs) of the assets included in the multimedia content;
a namespace provider (114) which is operable to provide one namespace for each prefix;
an MPV file formatter (116) which is operable to control an MPV file corresponding to the multimedia content on the basis of the profilebag elements generated by the profilebag element generator (111), the unique identification information generated by the identification information generator (112), the LastURL generated by the last URL generator (113), and the namespaces provided by the namespace provider (114), and generates metadata of the MPV file; and
a metadata generating controller (115) which is operable to control the MPV file formatter to generate metadata of an MPV file based on a metadata format defined by the MPV specification.

7. A storage medium having recorded thereon a computer readable program for performing a MultiPhotoVideo or MusicPhotoVideo (MPV) file creating method in a multimedia application environment, the MPV file creating method comprising:
generating profilebag elements based on multimedia content;
generating unique identification information of assets included in the multimedia content;
generating a last uniform resource locator (URL) based on universal resource identifiers (URIs) of the assets included in the multimedia content; and
creating an MPV file corresponding to the multimedia content based on the profilebag elements, the unique identification information of the assets, and the LastURL.
